# EUROPEAN PATENT APPLICATION

(11) **EP 1 785 933 A2**
(43) Date of publication of application: **16.05.2007**
(21) Application number: 06008650.1
(22) Date of filing: 27.04.2006
(51) Int. Cl.: G06Q 30/00

(54) **Method and apparatus for displaying processed multimedia and textual content on electronic signage or billboard displays through input from electronic communication networks**

(30) Priority: 29.04.2005 MT 274705
(71) Applicant: Dalli, Angelo, Leeds LS12 1DF (GB); Metz, Maik, 13465 Berlin (DE)
(72) Inventor: Dalli, Angelo, Leeds LS12 1DF (GB); Metz, Maik, 13465 Berlin (DE)

(57) **Abstract**

A multimedia and textual content information delivery and display system enabling content obtained from electronic communication networks to be processed, transmitted, and displayed on private and public electronic signage or billboard display systems. Servers connected to the electronic communication networks receive multimedia and textual content from a plurality of clients and process the aforesaid content into compatible formats for forwarding, storage and scheduled and unscheduled transmission to the display systems, with intelligent content processing applied on a contextual and location-aware basis. An automated analysis system employing a plurality of knowledge and rules performs a variety of checks to ensure that the content conforms to appropriate legislative rules and commercial and social conventions, with an option for manual inspection and override, before display and transmission, while allowing for some limited forms of direct interaction. Feedback, operational status checks, billing information, audit trails and reports are generated at various stages.

## Description

### BACKGROUND OF THE INVENTION -- FIELD OF INVENTION

The present invention relates to a system for displaying multimedia and textual content on electronic signage or intelligent billboards, where the content intended for display is transmitted by clients over an electronic communication network which is then processed and vetted automatically and finally routed to the appropriate display sign or billboard, with feedback sent back over an electronic communication network. More particularly, the invention relates to a system permitting direct placement, display and verification of messages, advertising and other multimedia content at desirable locations, where an automated system with a manual override option analyses, vets and processes the content using a system of rules that determine the appropriateness of the messages, advertising and other multimedia content taking legal compliance, social norms, client preferences, geographical location and other relevant factors into consideration.

### BACKGROUND OF THE INVENTION

Electronic signage and electronic billboard displays are becoming ever more common in various public and private places. Electronic signage and billboard displays can effectively convey information, in both textual and multimedia form, to groups of people simultaneously. This localised broadcasting capability of electronic signage and billboard displays makes them an attractive medium for information displays, advertising, entertainment and various other uses.

Traditional signage and billboards do not allow much scope for change in the content that needs to be displayed. Various systems have been proposed, for example, using mechanical systems that alternate between a fixed limited number of displays in a mechanical billboard, or a static slide-show like presentation linked to electronic signage.

The present invention allows the normally passive audience viewing content on electronic signage and billboard displays to interact with the displays and publish their own content, both textual and multimedia. The processing of the user submitted content is performed in real-time, while giving various sophisticated scheduling options to permit both ad-hoc, impulse usage and well planned, targeted content display. Scheduling can be based on various patterns, including traffic patterns, time of day, location, weather, external events, type of audience and other patterns.

One of the main drawbacks with deploying a system that allows the general public to interact with electronic signage and billboard displays is that the content vetting, checking and processing procedures needed to ensure that the end result being displayed on the electronic signage and billboard displays is acceptable vis-à-vis a number of criteria, such as geospatial, temporal, linguistic, legal compliance factors, together with social norms and customs and other relevant factors. This bottleneck leads to long delays in practice, making it either impossible to offer an acceptable level of interactivity and/or artificially constraining the level of interactivity to a few pre-determined responses, actions or restricting the users to a strictly pre-defined domain, such as a game with highly limited freedom.

The present invention overcomes these limitations by processing multimedia and textual content, inputted from electronic communication networks, using a sophisticated automated system that can have a variety of associated knowledge bases, allowing the automated system to determine, and if necessary, modify the content. The content can then be formatted properly, possibly enhanced and finally displayed on electronic signage or billboard displays. Enhancement can take place in various ways, such as adding poll results and informative graphs to content. Animations can also be generated to compliment textual content, for example, displaying an animation of a beverage when a message related to drinks is received, or the display of an animated cupid when a Valentine's Day message is received. The animations thus enhance and add value to the original content. This is one of the main ways of how the present invention adds value over existing display systems.

The present invention opens up various new opportunities for both indoor and outdoor activities and virtually creates a new market that does not presently exist. The present invention also allows profitable new income streams based on the proliferation and popularity of personal communication devices such as cellular phones and various other mobile devices, allowing them to be utilised for new activities such as vanity displays and publishing, micro-publishing to targeted audiences, localised advertising campaigns and viral content displays.

### PRIOR ART

U.S. Pat. No. 5,612,741 and U.S. Pat. 5,257,017 mention the use of video billboards for the display of advertising and other messages in conjunction with systems of optical lenses that provide an enlarged view of billboard displays.

U.S. Pat. No. 5,543,856 describes methods of manipulating and enhancing video feeds for subsequent display on electronic billboards, with the video feeds being provided from a pre-defined environment, such as a tennis game.

U.S. Pat. No. 6,430,603 describes a system that allows advertisers to place adverts on electronic billboards at selected time ranges, with means of verification of traffic counts nearby. The system also allows various reports to be generated and content to be uploaded via the Internet. The system is mainly one-way, with the interactive element being reserved for the quick and efficient update of displayed content and the reporting of verification information. Content processing is on a basic level of video format conversion, as there is no provision of enhancement and transformation of the content itself. Furthermore there is no provision for the automated checking and processing of input content for compliance with various criteria.

U.S. Pat. No. 5,233,423 describes a method of storing advertising internally on television displays, and displaying these stored adverts at scheduled times and upon particular events, turning the television into a mini-billboard for advertisers. The system however does not have provision for user control of when the advertising and content is displayed, which may lead to various undesirable effects, such as distracting advertising being displayed during a favourite movie, blocking parts of it.

U.S. Pat. No. 5,214,793 and U.S. Pat. 5,848,129 are concerned with the transmission of information to vehicles via a network of dedicated transmitters located near trafficked areas such as highways, creating a network of virtual vehicular billboards inside each vehicle.

U.S. Pat. No. 6,202,023 and U.S. Pat. No. 6,731,940 describe systems of finding and referencing the geographical position of users in a mobile environment, which may be useful if the electronic signage or billboard displays themselves are mobile. Electronic signage and billboard displays that are installed at a fixed position can utilise fixed position information to determine their location using simpler techniques. Since the content display is limited to a particular physical distance, each electronic signage and billboard display can make reasonable assumptions about the geographical location of the people who are viewing the content.

U.S. Pat. No. 6,675,165 describes a method for utilising geographical positional information relating to billboard displays and electronic signage to provide information via the Internet and other communication networks. The billboard displays and electronic signage here act as passive triggers for users, enabling them to find more information about products being advertised on the billboard by inputting its location either manually or automatically. However, there is no element of interactivity from the user towards the billboard displays and electronic signage in any way.

U.S. Pat. No. 5,898,384 describes a remote control system that can be used to control lighting conditions at various billboard locations automatically, improving the display visibility.

U.S. Pat. No. 5,845,083 describes a system for encoding and decoding of multimedia data that may be used in one of the possible embodiments of transmission components of the present invention, although most existing (and future) encoding and decoding systems can be supported by the present invention without any need for any changes.

### BACKGROUND OF THE INVENTION -- OBJECTS AND ADVANTAGES

Several objects and advantages of the present invention are:
(a) to provide a practical means of displaying textual content and/or multimedia content on geographically dispersed electronic signage and/or billboards with consideration for legal compliance and other relevant factors applicable at the display location;
(b) to avoid the business problems currently faced by individuals or organisations desiring to publish textual content and/or multimedia content without incurring unnecessary delays caused by presently existing inspection and/or approval processes;
(c) to enable direct or indirect interactions with electronic signage and/or billboards to take place in a safe and controlled manner without unnecessary limitations imposed on the participants in said direct or indirect interactions, while still conforming to applicable laws and other relevant factors applicable to said direct or indirect interactions;
(d) to provide means of integrating intelligent analysis and content processing and transformation elements into electronic signage and/or billboard display systems;
(e) to provide means for profitable operation of electronic signage and/or billboards;
(f) to provide means of integrating compliance and monitoring elements in the course of operation of electronic signage and/or billboards;
(g) to provide alternative uses for clients with different needs, including individuals or organisations who desire to display content on a one-time basis and individuals or organisations who desire to display content on a repeated and/or scheduled basis;
(h) to provide practical means for transformation and processing of content based on various factors such as geospatial, temporal, linguistic, legal compliance factors, together with social norms and customs and other relevant factors.

These, other and further objects and advantages on the present invention will become apparent from a consideration of the drawings and ensuing description.

### DRAWINGS -- FIGURES

FIG. 1 is a block diagram illustrating the system in accordance with the present invention.
FIG. 2A is a flowchart diagram illustrating the system operation up to content scheduling in accordance with the present invention.
FIG. 2B is a flowchart diagram illustrating the system operation from content scheduling to final content display in accordance with the present invention.

### DETAILED DESCRIPTION

While the present invention will be described more fully hereinafter with reference to the accompanying drawings, in which aspects of the preferred manner of practising the present invention are shown, it is to be understood at the outset of the description which follows that persons of skill in the appropriate arts may modify the invention herein described while still achieving the results of this invention. Accordingly, the description which follows is to be understood as being a broad, teaching disclosure directed to persons of skill in the appropriate arts, and not as limiting upon the present invention.

For the purposes of promoting and understanding of the principles of the invention, reference will now be made to the embodiments illustrated in the drawings and to the language used to describe the same. It will be understood that no limitation is thereby intended and any alterations or modification in the illustrated device and method and further application of such device and method are herein contemplated.

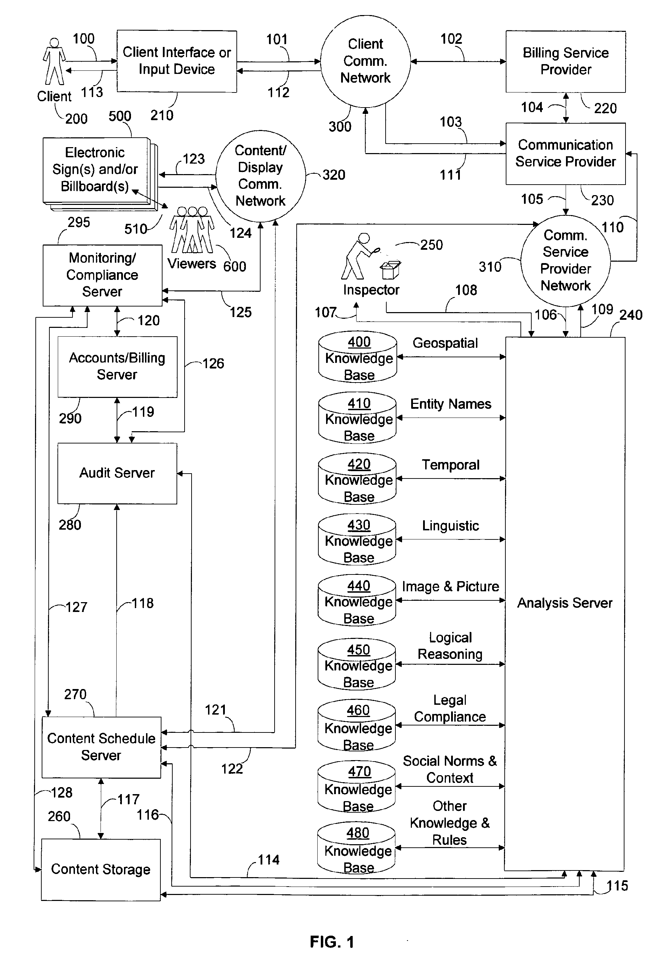

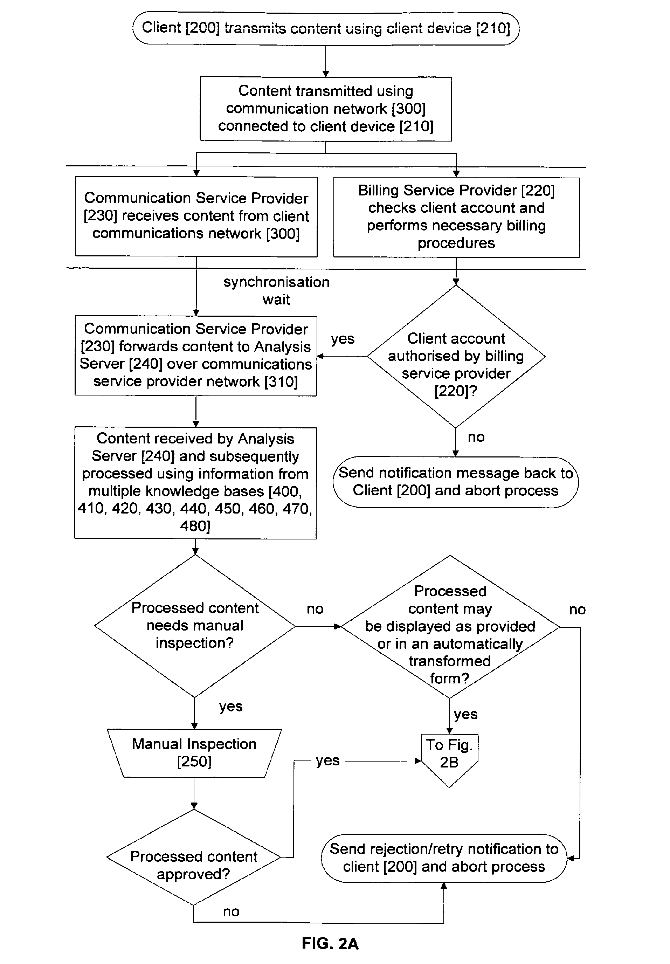

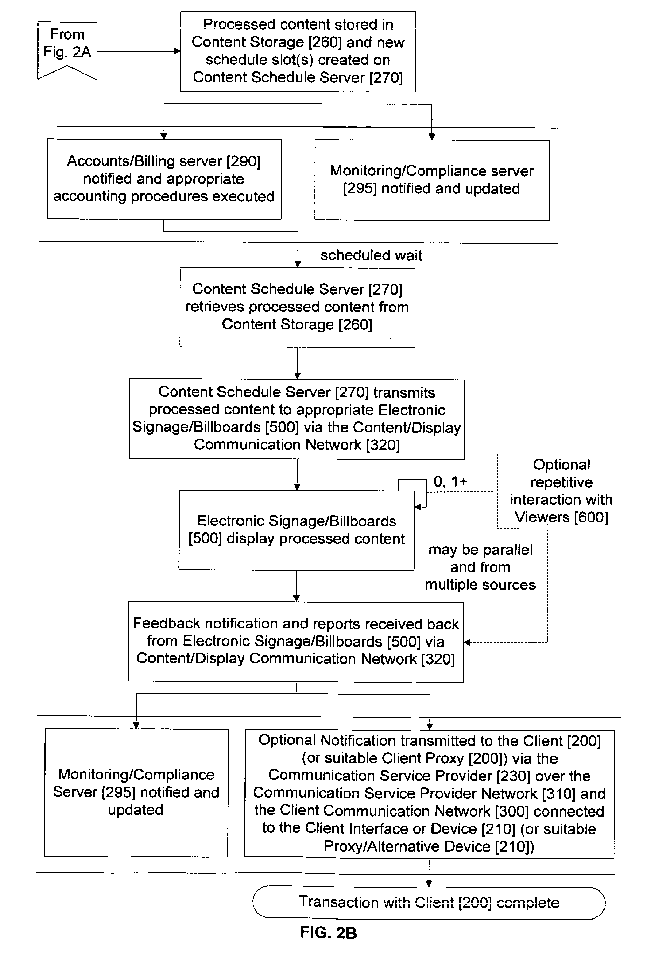

Referring to FIG. **1,** FIG. **2A,** FIG. **2B,** in accordance with the invention, an individual client **200,** using a suitable device **210,** typically either a mobile or cellular phone, handheld device, desktop computer, laptop computer, or a suitable user interface **210,** typically a form in a browser, or some other suitable device, terminal or interface, connected to a communication network **300,** creates and sends content **100** using the device or interface **210,** or some suitable proxy/alternative device for the client device **210** (not shown).

The content is internally processed by the device or interface **210** and transmitted in a suitable format **101** over the client communication network **300.** Examples of suitable content formats are short text messaging service (SMS), multimedia messaging service (MMS), email, general text content encoded in a suitable format such as ASCII, ANSI, EBCDIC or Unicode, still image data encoded in a suitable format such as RAW, JPEG, GIF, TIFF or BMP, video data encoded in a suitable format such as MPEG, music and audio data encoded in a suitable format such as CD track data, MP3 or WMA.

The client communication network **300** transmits the received content **103** to the appropriate communication service provider **230.** The client communication network **300** may also execute financial and account checks **102** with a billing service provider **220** before forwarding the content to the communication service provider **230.** The communication service provider **230** may also perform financial and account checks **104** with a billing service provider **220** independently of the client communication network **300.**

The client communication network **300** and the communication service provider **230** may utilise a plurality of different billing service providers (not shown). The communication service provider **230** may comprise a plurality of interconnected communication service providers (not shown), such as operator members of the international GSM network or ISPs on the Internet. The client communication network **300** may also have its own network service provider (not shown) that administers the network. The client communication network **300** may comprise a plurality of interconnected client communication networks (not shown).

In case of failure of the financial and account checks **102** performed by the billing service provider **220,** a notification is sent back **112, 113** to the client via the client communication network **300** and the client device or interface **210.**

If the financial and account checks **102** succeed, the billing service provider **220** generates the necessary accounting entries and executes the appropriate procedures to apply a new transaction to the client **200** account. The revenues generated from this transaction are later on split in varying proportions amongst the client communication network, the communication service provider,

If the financial and account checks **102** succeed, the communication service provider **230** transmits the received content **105** using the communication service provider network **310.** The communication service provider network may also comprise a plurality of interconnected communication service provider networks (not shown), such as the international GSM network or the Internet.

The communication service provider network **310** transmits the received content **106** to the appropriate analysis server **240.** The analysis server may comprise a plurality of interconnected or standalone analysis servers (not shown).

Various notifications may be generated during transmission of content from the communication service provider **230** and receipt of content by the analysis server **240.** These notifications are eventually transmitted back to the client **109, 110, 111, 112, 113.**

The analysis server **240** processes the received multimedia or textual content transmitted in step **106** by the communication service provider **310** using a plurality of knowledge bases **400, 410, 420, 430, 440, 450, 460, 470, 480.** The knowledge bases themselves comprise of a plurality of databases, rules, and other suitably encoded knowledge (not shown). Typically, these knowledge bases are used in systems employing artificial intelligence (Al), in natural language processing and understanding (NLP, NLU) systems, real time control systems (RTC), decision support systems (DSS), executive information systems (EIS), data mining and warehousing, and other systems where an element of intelligent processing, transformation, enhancement, storage and transmission of content is needed.

In the preferred embodiment as shown in FIG. 1, knowledge base **400** contains geospatial knowledge and information that may typically be used to identify geographic locations and geographical names present in the content; to suitably modify content and data according to geospatial context and/or constraints; to link and convert geographical named references and/or entities to physical coordinate systems such as latitude and longitude coordinates, polar coordinates, grid systems, astronomical coordinate systems and other coordinate/geographical location systems including both terrestrial-based systems and systems capable of handling extraterrestrial location references and information; to obtain relevant additional information and knowledge based upon geospatial context and/or constraints; to transform content and data into suitable formats and/or input to other systems capable of handling geospatial information such as geographic information systems, geolocation systems and geographic positioning systems; and other uses where geospatial information is useful. Knowledge base **400** will typically employ one or more components such as a gazetteer; a recogniser for geographical locations and references; a disambiguation component; and a set of rules and statistics that partially govern the subsequent behaviour of the analysis server **240,** and any other knowledge bases that may depend on information from knowledge base **400.**

In the preferred embodiment as shown in FIG. **1,** knowledge base **410** contains named entity knowledge and information that may typically be used to identify named entities, such as person names, organisation and institution names, locations, and other types of named entities present in the content; to suitably modify content and data according to the named entities present in the content; to link and convert named entity references to other entities and different kinds of information and objects; to obtain relevant additional information and knowledge based upon named entity context and/or constraints; to signal the presence of offensive, malicious or otherwise unacceptable content with respect to named entities; to transform content and data into suitable formats and/or input to other systems capable of handling named entity information; and other uses where named entity information is useful. Knowledge base **410** will typically employ one or more components such as a named entity list; a recogniser for named entities and references; a gender identification component; a disambiguation component; an anaphora resolution component; and a set of rules and statistics that partially govern the subsequent behaviour of the analysis server **240,** and any other knowledge bases that may depend on information from knowledge base **410.**

In the preferred embodiment as shown in FIG. **1,** knowledge base **420** contains temporal knowledge and information that may typically be used to identify temporal references, events, public and private holiday names, religious feast names and other date and time and calendar references present in the content; to suitably modify content and data according to temporal context and/or constraints; to link and convert temporal references, entities, values and events to a suitable temporal system such as ISO 8601, ISO 19108, Julian dates, UTC, astronomical temporal systems, geological temporal systems, computer-based temporal systems and other temporal systems; to obtain relevant additional information and knowledge based upon temporal context and/or constraints; to transform content and data into suitable formats and/or input to other systems capable of handling temporal information; and other uses where temporal information is useful. Knowledge base **420** will typically employ one or more components such as a recogniser for temporal entities and references; a recogniser for events; a list of holiday names and religious feast days with appropriate calendar information; a disambiguation component; a calendar conversion component; a parser for relevant markup languages and standards such as TimeML and TIMEX; an anaphora resolution component for temporal expressions; and a set of rules and statistics that partially govern the subsequent behaviour of the analysis server **240,** and any other knowledge bases that may depend on information from knowledge base **420.**

In the preferred embodiment as shown in FIG. **1,** knowledge base **430** contains linguistic knowledge and information that may typically be used to parse textual content using linguistic rules and relevant statistics; to apply natural language processing techniques to content; to suitably modify content and data according to linguistic context and/or constraints; to translate content from one language to one or more other languages; to obtain relevant additional information and knowledge based upon linguistic context and/or constraints; to transcribe speech to text; to transform content and data into suitable formats and/or input to other systems capable of handling linguistic information; and other uses where linguistic information is useful. Knowledge base **430** will typically employ one or more components such as a recogniser for part of speech references; a textual parser and analyser; a statistical database containing information about common words, frequency statistics and n-gram occurrences; a disambiguation component; a general purpose anaphora resolution component; a Markov chain analysis component; a finite state automaton and/or transducer component; a speech recognition component; a language identification component; a dialogue management component; a parser for relevant markup languages and standards such as XML, EAGLES, and CLAWS; an automated tagging component; a question-answering component; and a set of rules and statistics that partially govern the subsequent behaviour of the analysis server **240,** and any other knowledge bases that may depend on information from knowledge base **430.**

In the preferred embodiment as shown in FIG. **1,** knowledge base **440** contains image and picture knowledge and information that may typically be used to analyse images, pictures, drawings, video frames and other multimedia information using relevant rules and statistics; to apply image processing techniques to content; to suitably modify content and data according to image context and/or constraints; to extract any textual content from images; to obtain relevant additional information and knowledge based upon image context and/or constraints; to transform content and data into suitable formats and/or input to other systems capable of handling image information; and other uses where image information is useful. Knowledge base **440** will typically employ one or more components such as an image processor for encoding and decoding images; an image processor capable of applying a range of common effects such as contour tracing, line finding, Hough transforms, general image filters and kernels, resampling and resizing transforms, Fourier transforms, wavelet transforms, histogram analysis and transforms, hue and saturation calibration, contrast and brightness calibration, and noise reduction; image compression and decompression component; OCR components; ICR components; a statistical database containing information about common objects and contexts in images used by an object recogniser augmented with suitable rules and heuristics; a disambiguation component; an image classification component; and a set of rules and statistics that partially govern the subsequent behaviour of the analysis server 240, and any other knowledge bases that may depend on information from knowledge base **440.**

In the preferred embodiment as shown in FIG. **1,** knowledge base **450** contains logical reasoning knowledge and information that may typically be used to automatically create inferences and deductions based upon the received content and prior information held in knowledge base **450** and any other knowledge base that can be accessed by knowledge base **450;** to derive new information and data as a by-product of execution of logical rules and reasoning; to obtain relevant additional information and knowledge based upon logical reasoning constraints; to provide the necessary infrastructure needed for a structured decision making process; to provide logical reasoning capabilities to other systems and other components in the present invention; and other uses where logical reasoning knowledge and information is useful. Knowledge base **450** will typically employ one or more components such as a logical reasoning database; a deduction mechanism; an inference mechanism; a tautological reasoning mechanism; an automated prover; a flowchart specification and representation component; a structured decision making process specification and representation component; a fuzzy logic decision component; a probabilistic logic decision component; a Bayesian logic and rule handling component; and a set of rules and statistics that partially govern the subsequent behaviour of the analysis server **240,** and any other knowledge bases that may depend on information from knowledge base **450.**

In the preferred embodiment as shown in FIG. **1,** knowledge base **460** contains legal compliance knowledge and information that may typically be used to check that the content complies with any applicable laws and customs in particular contexts as determined by the system as a whole, and/or by the analysis server **240,** and/or by information from one or more knowledge bases **400, 410, 420, 430, 440, 450, 460, 470, 480;** to formally codify legal knowledge and compliance knowledge using the logical decision infrastructure and framework provided by knowledge base **450;** to augment the logical decision infrastructure and framework provided by knowledge base **450** using suitable extensions catering for the nuances of handling different laws; to provide storage for codified legal knowledge and compliance knowledge; to suitably modify content and data according to legal context and/or constraints; to obtain relevant additional information and knowledge based upon legal context and/or constraints; to transform content and data into suitable formats and/or input to other systems capable of handling legal information and/or compliance information; and other uses where legal information and/or compliance information is useful. Knowledge base **460** will typically employ one or more components such as a formal legal decision making component based upon theoretical logical models; a disambiguation component; a priority handling component with an option for flagging items for manual intervention and/or inspection; an interface with knowledge bases **410, 420** to enable efficient reuse of the geospatial and temporal information processing infrastructure; an interface with knowledge base **430** to enable efficient reuse of the language processing infrastructure; an interface with knowledge base **440** to enable efficient reuse of the image processing infrastructure; an interface with knowledge base **450** to enable efficient reuse of the logical reasoning infrastructure; an interface with knowledge base **470** to enable efficient reuse of the social norms, customs, conventions and preferences knowledge infrastructure; a comparison component that can compare differences between compliance in different jurisdictions; a storage component that can store codified knowledge of laws and compliance rules in different jurisdictions around the world; and a set of rules and statistics that partially govern the subsequent behaviour of the analysis server **240,** and any other knowledge bases that may depend on information from knowledge base **460.**

In the preferred embodiment as shown in FIG. **1,** knowledge base **470** contains social norms/customs/preferences and contextual knowledge and information that may typically be used to check that the content complies with any applicable social norms and customs together with social preferences and client preferences in particular contexts as determined by the system as a whole, and/or by the analysis server **240,** and/or by information from one or more knowledge bases **400, 410, 420, 430, 440, 450, 460, 470, 480;** to formally codify knowledge of social norms, customs and preferences using the iogicai decision infrastructure and framework provided by knowledge base **450;** to augment the logical decision infrastructure and framework provided by knowledge base **450** using suitable extensions catering for the nuances of handling different social norms, customs, conventions and preferences; to augment the legal decision infrastructure and framework provided by knowledge base **460** using suitable extensions catering for the nuances of handling different social norms, customs, conventions and preferences; to suitably modify content and data according to social norms, customs, conventions and preferences context and/or constraints; to obtain relevant additional information and knowledge based upon social norms, customs, conventions and preferences context and/or constraints; to transform content and data into suitable formats and/or input to other systems capable of handling social norms, customs, conventions and preferences information; and other uses where social norms, customs, conventions and preferences information and knowledge is useful. Knowledge base **470** will typically employ one or more components such as a formal decision making component based upon theoretical logical models; a disambiguation component; a priority handling component with an option for flagging items for manual intervention and/or inspection; an interface with knowledge bases **410, 420** to enable efficient reuse of the geospatial and temporal information processing infrastructure; an interface with knowledge base **430** to enable efficient reuse of the language processing infrastructure; an interface with knowledge base **440** to enable efficient reuse of the image processing infrastructure; an interface with knowledge base **450** to enable efficient reuse of the logical reasoning infrastructure; an interface with knowledge base **460** to enable efficient reuse of the legal reasoning infrastructure; a comparison component that can compare differences between social norms customs, conventions and preferences in different locations around the world; a storage component that can store codified knowledge of social norms customs, conventions and preferences in different locations around the world; a storage component that can store codified knowledge of client preferences; and a set of rules and statistics that partially govern the subsequent behaviour of the analysis server **240,** and any other knowledge bases that may depend on information from knowledge base **470.**

In the preferred embodiment as shown in FIG. **1,** knowledge base **480** contains other knowledge and information that may typically be used to offer additional knowledge, rules and information that can be used to analyse and transform content but that do not logically pertain to knowledge bases **400, 410, 420, 430, 440, 450, 460, 470.** Knowledge base **480** will typically employ one or more components such as a generic template matching component; external sensor interface components; external application interface components; data mining components; network analysis components; link analysis components; and a set of rules and statistics that partially govern the subsequent behaviour of the analysis server **240,** and any other knowledge bases that may depend on information from knowledge base **480.**

The analysis server **240** may use a combination of one or more knowledge bases **400, 410, 420, 430, 440, 450, 460, 470, 480** to process the received content.

Knowledge bases **400, 410, 420, 430, 440, 450, 460, 470, 480** may enter into repeated interactions with a combination of one or more knowledge bases **400, 410, 420, 430, 440, 450, 460, 470, 480** to process the received content.

The analysis server **240** receives final results from knowledge bases **400, 410, 420, 430, 440, 450, 460, 470, 480** and determines what content transformations shall be permitted to be applied.

The analysis server **240** receives final results from knowledge bases **400, 410, 420, 430, 440, 450, 460, 470, 480** and determines whether human intervention and/or inspection needs to be carried out.
If the analysis server **240** determines that human intervention and/or inspection needs to be carried out it sends a notification **107** to an appropriate inspector **250** who carries out a manual inspection/quality assurance process. The inspector **250** has the power to override one or more of the analysis server **240** decisions and apply any kind of transformation to the content as deemed fit. The inspector **250** can also reject content from being displayed. The inspector **250** may also add a personalised note to any notification sent back by the system to the client **200,** especially in the case of a rejection.

The inspector **250** may consult a plurality of other inspectors (not shown) in arriving at a decision on any content passed to the inspector by the analysis server **240.**

The inspector **250** may consult knowledge bases **400, 410, 420, 430, 440, 450, 460, 470, 480** in arriving at a decision on any content passed to the inspector by the analysis server **240.**

The inspector **250** may consult other external sources (not shown) in arriving at a decision on any content passed to the inspector by the analysis server **240.**

The inspector **250** may reject content from particular users on the basis of a blacklist (not shown) that may be shared with other inspectors (not shown) and external parties (not shown). The inspector **250** may also add particular users to a blacklist (not shown) that may be shared with other inspectors (not shown) and external parties (not shown). The inspector **250** may also reject content from particular users upon instructions from appropriate parties (not shown) such as law enforcement personnel and court orders.

The inspector **250** may accept content from particular users on the basis of a whitelist (not shown) that may be shared with other inspectors (not shown) and external parties (not shown). The inspector **250** may also add particular users to a whitelist (not shown) that may be shared with other inspectors (not shown) and external parties (not shown). The inspector **250** may also accept content from particular users upon instructions from appropriate parties (not shown) such as law enforcement personnel and court orders.

The inspector **250** may override a rejection decision by the analysis server **240** and accept content based upon the results of the manual inspection/quality assurance process.

The inspector **250** sends feedback **108** in the form of relevant notifications and processed content to the analysis server **240.**

The analysis server **240** always assumes that the inspector **250** decision is final. The analysis server **240** always gives preference to the processed content returned in step **108** to the processed content suggested automatically by the analysis server **240.**

In case of any conflict between the decisions of the analysis server **240** and the inspector **250,** the system will always assume that the inspector **250** decisions are to be obeyed.

Any conflicts and differing decisions supplied by inspector **250** are automatically recorded by the analysis server **240** as part of the audit information **114** transmitted to an appropriate audit server **280.**

In the course of operation, the analysis server **240** generates audit information **114** that is transmitted to an appropriate audit server **280.** Audit server **280** is typically implemented as a central server that is possibly mirrored continuously by a backup audit server to ensure reliable and continuous operation.

Processed content is transmitted **115** by the analysis server **240** to the appropriate content storage **260** device. Content storage **260** may consist of a plurality of storage devices and/or servers together with backup devices (not shown). Content storage **260** is typically implemented using a network of storage servers (not shown) or a dedicated storage area network (SAN) (not shown) or some other suitable configuration that ensures reliable and continuous operation.

Schedule information is transmitted **116** by the analysis server **240** to the appropriate content schedule server **270.** A notification may be sent back **109** from the analysis server **240** via **110, 111, 112, 113** the communication service provider network **310,** the communication service provider **230** and the client communication network **300** back to the client **200.**

The content schedule server **270** may consist of a plurality of servers together with backup devices (not shown). Content schedule server **270** is typically implemented as a small number of servers with redundant backup to ensure reliable and continuous operation.

Content schedule server **270** may repeatedly consult **117** with the content storage **260** during the course of operation, to obtain copies of processed content and to perform and necessary checks and procedures.

Content schedule server **270** maintains and updates a schedule or cyclogram containing information about the specific time or set of times when particular processed content should be displayed on the appropriate sets of electronic signage or billboard 500 displays.

Content schedule server **270** tries to resolve any conflict in the schedule by allocating display time slots using a suitable scheduling conflict resolution strategy. Typically schedule conflicts will be resolved by allocating display time slots on a first-come first-served basis, with optional overrides from the analysis server **240** for higher priority processed content. The inspector **250** may also assign higher priority for processed content and thus can effectively block the display of any content if the need arises, for example, in an emergency situation or when acting upon advice from external parties (not shown) authorised to order such actions.

Content schedule server **270** can use a random time slot allocation strategy for processed content that is to be displayed for a particular number of times in every pre-specified period of time without regard to the exact display time slots.

Content schedule server **270** maintains statistics about the display frequencies of all available time slots on all displays **500.** These statistics can be used, amongst other uses, to generate marketing reports, to assign different pricing strategies based on particular display times, to perform better schedule conflict resolution, to predict revenues generated from every display and other uses.

Content schedule server **270** maintains time synchronisation across all components in the system, especially with the displays 500. Typically this is implemented with the use of network synchronisation messages or a dedicated time synchronisation server or servers (not shown).

Content schedule server **270** maintains time synchronisation across all of its constituent components, irregardless of their physical location.

Content schedule server **270** continually tries to correct any time synchronisation error on a best-effort basis in the most expeditious manner possible to avoid unpredictable system behaviour and to ensure compliance with the content schedule or cyclogram.

Knowledge base **460** can be used to determine data retention, backup and destruction policies applied to all content stored in the content storage **260.**

Knowledge base **460** can be used in conjunction with a combination of content storage **260,** content schedule server **270,** audit server **280,** and accounts/billing server **290** to help determine compliance in various situations.

Upon successful scheduling of processed content by the content schedule server **270** a notification with a summary or detailed report about the scheduled display times of the relevant processed content may be sent back **122** to the client via the communication service provider network **310,** the communication service provider **230** and the client communication network **300** back to the client **200.**

At regular intervals the content schedule server **270** transmits **121** processed content to the appropriate displays **500** over the content/display communication network **320.** The transmission intervals are determined by the processed content schedule or cyclogram maintained by the content schedule server **270.**

The processed content transmission **121** may be in an encrypted format to increase the security of the private content/display communication network.

The content schedule server **270** maintains a list of displays (not shown) with appropriate contact and location information enabling processed content to be sent to specific displays **500.**

The electronic signage and/or billboards **500** consist of a plurality of electronic signs and/or billboards that may be contacted either individually or as part of a group of related electronic signs and/or billboards. Typically the electronic signage and/or billboards **500** are implemented using a variety of display technologies including, but not limited to, LED, Plasma, TFT, TV, cathode ray tube, ligh projection, fluorescence, neon, radioactive or electromagnetic excitation, polymer, intelligent ink and other display technologies that allow content to be displayed and changed through some form of electronic or similar input.

The electronic signage and/or billboards **500** can be interconnected with a subset of all available displays using secondary level networks (not shown). Typically a group of electronic signs and/or billboards may be connected together in a private network, displaying the same processed content simultaneously. In another example, a large building may have a central computer system capable of retransmitting the same processed content to a plurality of displays.

The electronic signage and/or billboards **500** can be connected directly or indirectly to the contents/display communication network **320.**

The contents/display communication network **320** may comprise a plurality of interconnected contents/display communication networks (not shown). The contents/display communication network **320** may also have its own network service provider (or a plurality of network service providers) that administers the network (not shown).

The processed content transmitted **121** by the content schedule server **270** to the contents/display communication network **320** is transmitted **123** to the electronic signage and/or billboards **500.** The electronic signage and/or billboards **500** then display the processed content using appropriate display techniques and methods. If the processed content is encrypted in transmission step **121** the processed content is decrypted prior to display.

The electronic signage and/or billboards **500** send feedback **124** using the contents/display communication network **320.** This feedback forms the basis of various reporting and monitoring transactions and records generation. The feedback may also be used to generate notification reports to the client **200.**

The electronic signage and/or billboards **500** may enter into a number of direct interactions **510** with viewers **600** who are in a suitable position to view the displayed processed content.

The direct interactions **510** are limited to interactions that do not need the intervention of the analysis server **240** and/or the inspector **250.** Typically these direct interactions are thus limited to simple yes/no answers, answers to questions where the number of possible answers is limited to a pre-approved list of answers, and to simple action commands chosen from a pre-approved list of actions. Examples of these type of interactions in a practical situation will be a poll question or an event where viewers can manipulate a displayed object.

The direct interactions **510** can involve one or more persons who form a subset of the viewers **600.** The displayed content on the electronic signage and/or billboards **500** reflects the original processed content transmitted in step **123** with subsequent modifications carried out as a result of the direct interactions **510.**

The electronic signage and/or billboards **500** may include information about the direct interactions **510** as part of the feedback **124** sent using the contents/display communication network **320.**

The allowed direct interactions **510** need to be approved by the analysis server **240.** Since the inspector **250** can override the behaviour of the analysis server **240,** the inspector **250** also has control of what direct interactions **510** get approved or rejected.

Processed content that contains direct interactions **510** is rejected in full if one or more direct interactions are rejected.

Processed content that contains direct interactions **510** is approved in full if and only if the processed content is approved by the analysis server **240** (or indirectly by the inspector **250)** and all direct interactions **510** are approved by the analysis server **240** (or indirectly by the inspector **250)** in their entirety.

Processed content that contains direct interactions **510** is rejected if not approved in full.

Sequences of all possible direct interactions **510** must lead to processed content modifications that can be pre-determined in advance and end in one of a plurality of approved termination states.

Sequences of all possible direct interactions **510** that have open-ended processed content modifications or other type of modifications that lead to modifications that cannot be pre-determined in advance need to submit their current processed content together with the proposed modification back to the analysis server **240** for approval. Processed content submitted in this manner to the analysis server **240** for approval can get rejected.

Sequences of direct interactions **510** that need to get periodical approval from the analysis server **240** can get terminated and rejected if the proposed modifications lead to unacceptable content as determined by the analysis server **240** with possible input from the inspector **250.** An optional notification or retry can be sent back in case of a rejection of a sequence of direct interactions **510** to provide the possibility of resubmission for approval.

Sequences of direct interactions **510** are fully approved if the sequence is fully approved at all stages until the sequence terminates in an approved termination state.

Sequences of direct interactions **510** are rejected if not fully approved at any stage or if the sequence is determined to terminate in a non-approved termination state.

The involvement of the analysis server **240** and possibly the inspector **250** allows for limited interactivity in a controlled environment, together with the capability of including open-ended input without compromising compliance with all aspects of compliance, including legal, social and technical compliance, at any stage.

The automated nature of the analysis server **240** allows quasi real-time interactive operation of the system in a compliant, controlled manner for processed content involving direct interactions **510** without incurring the inevitable delay involved in referring to the inspector **250.**

The automated nature of the analysis server **240** allows real-time or quasi real-time operation of the system in a compliant, controlled manner for processed content that does not involve direct interactions **510** without incurring the inevitable delay involved in referring to the inspector **250.**

Direct interactions **510** are typically enabled through external devices connected to the electronic signage or billboards **500** or through some form of alternative connection from devices provided by the viewers **600.** Examples of the latter include IrDA or Bluetooth or WiFi connections setup by mobile phone devices provided by persons forming part of the viewers **600.**

The content schedule server **270** interacts with the audit server **280** and the accounts/billing server **290** to generate audit information and audit trails, generate billing and accounts information and related transactions, and generate relevant reports

The audit server **280** and the accounts/billing server **290** interact with various components in the system at different stages during the system operation, illustrated by the interaction steps **114, 118, 119.** Some of these interactions are not shown in FIG. **1,** FIG. **2A,** FIG. **2B** for clarity as they should be apparent to persons of skill in the appropriate arts.

The monitoring/compliance server **295** monitors various aspects of the system to monitor the system operational status and verify that content display schedules are being honoured correctly. The monitoring/compliance server **295** also provides a pro-active means of correcting any deficiencies in the system operation rather than the passive means of recording the operational status provided by the audit server **280.**

The monitoring/compliance server **295** may consist of a plurality of servers together with backup devices (not shown). Monitoring/compliance server **295** is typically implemented as a central server with redundant backup to ensure reliable and continuous operation.

The monitoring/compliance server **295** may check and verify **128** the operational status and contents stored in the content storage **260;** check and verify **127** the schedule and/or cyclogram maintained by the content schedule server **270,** and check and verify the operational status of the content schedule server **270;** check and verify **126** the operational status of the audit server **280,** and exchange information with the audit server **280;** check and verify **125** the operational status of the electronic signage and/or billboards **500** using the content/display communication network **320;** check and verify **120** the operational status of the accounts/billing server **290,** and exchange information with the accounts/billing server **290.**

The monitoring/compliance server **295** has a holistic picture of the system operational status and can thus spot problems and report discrepancies immediately as they occur, or in some cases, predict potential problems before they occur, thus actively preventing the system from malfunctioning.

The monitoring/compliance server **295** may communicate with the analysis server **240** or any of its associated knowledge bases **400, 410, 420, 430, 440, 450, 460, 470, 480** in order to determine the system compliance at any stage during operation.

The monitoring/compliance server **295** may transmit notification to the inspector **250** and to various administration personnel (not shown) if it detects anomalous situations that can prove to be detrimental to the system, or if it deems this notification step to be appropriate.

The monitoring/compliance server **295** may send reset and diagnostic commands to individual electronic signage and/or billboards **500** to ensure reliable and continuous operations or if instructed to do so by appropriate administration personnel (not shown).

The monitoring/compliance server **295** may send shutdown commands to individual electronic signage and/or billboards 500 to prevent damage to the system or if instructed to do so by appropriate administration personnel (not shown).

The monitoring/compliance server **295** can generate suggested downtime schedules in conjunction with the content schedule server **270** statistics for maintenance activities.

The monitoring/compliance server **295** can generate detailed verification reports for appropriate administration personnel (not shown), clients and other persons, such as law enforcement personnel. These reports may be cross-referenced with the audit trail information stored in the audit server **280.**

Various reports and statistics are generated at every step of operations of the present invention. These reports are not shown in FIG. **1,** FIG. **2A,** FIG. **2B** for clarity as they should be apparent to persons of skill in the appropriate arts.

## Claims

1. A system for displaying processed multimedia and textual content on electronic signage or billboard displays **characterised in that** said processed multimedia and textual content is analysed for compliance and optionally transformed using a plurality of formalised knowledge.

2. The system of claim 1 whereby said multimedia and textual content is transmitted over one or more electronic communication networks, and said multimedia and textual content is composed and displayed on at least one electronic device or a plurality of interconnected electronic devices.

3. The system of claim 1 whereby said multimedia and textual content is transmitted over one or more electronic communication networks, and said multimedia and textual content is composed using at least one electronic interface or a plurality of interconnected electronic interfaces.

4. The system of claim 1 whereby said formalised knowledge is represented on a suitable computerised system or other automated system capable of representing formalised knowledge.

5. The formalised knowledge of claim 4 further comprising of one or more elements selected from the group consisting of a plurality of knowledge bases, a plurality of databases, a plurality of rules, a plurality of statistical information.

6. The formalised knowledge of claim 4 further comprising of one or more in the group consisting of geospatial knowledge and information, geographical reference information and recognisers, geographical reference disambiguation knowledge, geospatial context information, coordinate system transformation techniques, geolocation knowledge, geospatial information transformation techniques.

7. The formalised knowledge of claim 4 further comprising of one or more in the group consisting of named entity recognisers, named entity knowledge and information, named entity disambiguation knowledge, named entity information transformation techniques.

8. The formalised knowledge of claim 4 further comprising of one or more in the group consisting of temporal expression recognisers, event expression recognisers, temporal knowledge and information, public and private holiday knowledge, calendar information and knowledge, temporal information transformation techniques.

9. The formalised knowledge of claim 4 further comprising of one or more in the group consisting of linguistic knowledge and information, natural language processing techniques and methods, language identification knowledge, machine translation components, speech-to-text transcription components, dialogue management components, question answering components, linguistic information transformation techniques.

10. The formalised knowledge of claim 4 further comprising of one or more in the group consisting of image and picture and graphics knowledge and information, optical character recognition components, video decoding components, video encoding components, intelligent character recognition components, image and picture and graphics information transformation techniques.

11. The formalised knowledge of claim 4 further comprising of one or more in the group consisting of logical reasoning knowledge and information, automated inference methods, automated deduction methods, logical rule codification methods, logical rule storage methods, logical rule retrieval methods, logical rule generation methods, logical disambiguation methods, infrastructure for decision making processes, automated logical reasoning methods, logical knowledge and information transformation techniques.

12. The formalised knowledge of claim 4 further comprising of one or more in the group consisting of legal knowledge and information, legal compliance decision methods, legal jurisdiction knowledge and information, legal precedent knowledge and information, legal knowledge and information transformation techniques.

13. The formalised knowledge of claim 4 further comprising of one or more in the group consisting of social knowledge and information, social compliance decision methods, social knowledge and information transformation techniques.

14. The formalised knowledge of claim 4 further comprising of one or more in the group consisting of historical knowledge and information, personal knowledge and information, expert knowledge and information, techniques for recognition of indicia, techniques for generation of indicia, knowledge and information transformation techniques.

15. The system of claim 1 further comprising one or more content transmission means selected from the group consisting of one or more electronic communication networks, a plurality of electronic communication networks, a plurality of interconnections with a plurality of electronic communication networks.

16. The system of claim 1 further comprising one or more interconnections with at least one communication service provider, and one or more interconnections with at least one billing service provider.

17. The system of claim 1 further comprising:
(a) at least one accounts-billing server responsible for one or more in the group consisting of the maintenance of accounting records and transactions, maintenance of financial information received from a plurality of billing service providers, provision of financial information for audit purposes, display authorisation on the basis of financial and account information;
(b) at least one audit server responsible for one or more in the group consisting of records keeping for audit trail purposes, provision of general information for audit purposes, maintaining records of operational status and feedback;
(c) at least one means for content storage responsible for one or more in the group consisting of storage of content supplied to the system, storage of content generated by the system, content verification, content backup, content copying, content transmission, general purpose storage of information, data, textual content and multimedia content;
(d) at least one content schedule server responsible for one or more in the group consisting of maintenance of display scheduling information, maintenance of display statistics, generation of display scheduling information, generation of display statistics, display schedule verification, display schedule conflict resolution, content transmission to electronic signage or billboards, transmission of notifications.

18. The system of claim 1 further comprising at least one compliance-monitoring server responsible for one or more in the group consisting of compliance monitoring with relevant rules and regulations, display feedback processing, display statistics processing, transmission of control commands to electronic signage or billboards, transmission of notifications, operational status monitoring, automated error correction, automated error detection.

19. The system of claim 1 further comprising at least one analysis server responsible for one or more in the group consisting of utilising knowledge and information stored in a plurality of knowledge bases to determine the compliance of content with various constraints and rules, utilising knowledge and information stored in a plurality of knowledge bases to transform content in accordance with the said knowledge and information, transmission of content to inspectors, liaison with inspectors, maintenance or sharing of whitelists, maintenance or sharing of blacklists, transmission of various notifications.

20. A means for enabling interactions involving the exchange and transmission of processed multimedia or textual content with electronic signage or billboard displays **characterised in that** said interactions are analysed for compliance and optionally transformed using a plurality of formalised knowledge and said interactions automatically classified as being one in the group consisting of:
(a) interactions that are compliant; or
(b) interactions that need to be referred to a system such as the system of claim 1; or
(c) interactions that are not compliant and thus rejected.

21. The system of claim 1 further including the means of claim 20.
